# DEMANDE DE BREVET EUROPEEN

(11) **EP 1 731 820 A1**
(43) Date de publication de la demande: **13.12.2006**
(21) Numéro de dépôt: 06300468.3
(22) Date de dépôt: 12.05.2006
(51) Int. Cl.: F16L 37/02, F16L 37/04, F16L 33/03, F16L 11/12

(54) **Dispositif d'assemblage d'un raccord sur un boitier**

(30) Priorité: 20.05.2005 FR 0551313
(71) Demandeur: PEUGEOT CITROËN AUTOMOBILES S.A., 78140 Velizy Villacoublay (FR)
(72) Inventeur: Pinon, Fabien, 28130 Saint-Martin de Nigelles (FR)
(74) Mandataire: Ménès, Catherine

(57) **Abrégé**

Selon l'invention, ledit dispositif comprend, d'une part, un premier profil (11) aménagé à une extrémité dudit raccord (10) et un deuxième profil (21) aménagé sur ledit fût (20), lesdits premier et deuxième profils étant sensiblement conjugués et aptes coopérer par emmanchement du raccord (10) au fût (20), et, d'autre part, un moyen élastique (12) disposé à ladite extrémité du raccord (10) et apte à exercer un effort de maintien du premier profil contre le deuxième profil.

Application aux moteurs à combustion interne.

## Description

La présente invention concerne un dispositif d'assemblage d'un raccord à un fût de boîtier.

L'invention trouve une application particulièrement avantageuse dans le domaine de l'industrie automobile, notamment lorsque l'on doit assembler un raccord d'air sur le fût d'un boîtier papillon à l'entrée d'un répartiteur d'un moteur à combustion interne.

Actuellement, pour assembler un tel raccord sur un boîtier papillon, on emmanche une extrémité du raccord, réalisé en élastomère souple, à l'extérieur du fût du boîtier. Puis, on dispose un collier à vis autour de l'extrémité du raccord en contact avec le fût, et l'on serre le raccord contre le fût en vissant la vis du collier, laquelle, en diminuant le périmètre du collier, applique une force de pression du raccord sur le fût et réalise ainsi l'assemblage recherché.

On comprend que ce mode d'assemblage exige l'utilisation d'un outil de vissage, ou visseuse. Or, dans des environnements encombrés, il est parfois très difficile, voire impossible, aux visseuses d'accéder aux vis qu'elles doivent visser. C'est le cas en particulier pour les colliers à vis destinés à assembler les raccords d'air sur des boîtiers papillon, comme cela a été décrit plus haut. En effet, les boîtiers papillon sont généralement entourés de pièces multiples, notamment le corps du boîtier lui-même qui masque la vis du collier de serrage.

Aussi, le problème technique à résoudre par l'objet de la présente invention est de proposer un dispositif d'assemblage d'un raccord à un fût de boîtier, qui permettrait de faciliter l'opération d'assemblage et de la rendre possible quel que soit l'environnement des pièces à assembler.

La solution au problème technique posé consiste, selon la présente invention, en ce que ledit dispositif comprend, d'une part, un premier profil aménagé à une extrémité dudit raccord et un deuxième profil aménagé sur ledit fût, lesdits premier et deuxième profils étant sensiblement conjugués et aptes coopérer par emmanchement du raccord au fût, et, d'autre part, un moyen élastique disposé à ladite extrémité du raccord et apte à exercer un effort de maintien du premier profil contre le deuxième profil.

Ainsi, comme on le verra en détail plus loin, l'assemblage est effectué de manière très simple par emmanchement à force du raccord au fût en luttant contre l'action du moyen élastique, ceci jusqu'à l'entrée en coopération des deux profils conjugués, lesquels sont ensuite maintenus en coopération par ledit moyen élastique.

L'invention dispense donc tout recours à un outil particulier, tel qu'une visseuse, pour assembler le raccord sur le boîtier, ce qui simplifie considérablement l'opération d'assemblage, et surtout la rend possible même dans des environnements très encombrés.

Selon un premier mode de réalisation de l'invention, ledit raccord étant destiné à être emmanché à l'intérieur dudit fût, ledit premier profil est aménagé sur ladite extrémité à l'extérieur du raccord et ledit deuxième profil est aménagé à l'intérieur du fût.

Selon un deuxième mode de réalisation de l'invention, ledit raccord étant destiné à être emmanché à l'extérieur dudit fût, ledit premier profil est aménagé sur ladite extrémité à l'intérieur du raccord et ledit deuxième profil est aménagé à l'extérieur du fût.

Avantageusement, même si le moyen élastique peut être disposé de manière quelconque à l'extrémité du raccord, l'invention prévoit que ledit moyen élastique est disposé à l'intérieur dudit premier profil.

Enfin, deux formes particulières du moyen élastique sont prévues par l'invention. Selon une première forme, ledit moyen élastique est un ressort cylindrique annulaire, et, selon une deuxième forme, ledit moyen élastique est un ressort plat annulaire fendu.

La description qui va suivre en regard des dessins annexés, donnés à titre d'exemples non limitatifs, fera bien comprendre en quoi consiste l'invention et comment elle peut être réalisée.

La figure 1 est une vue de côté d'un premier mode de réalisation du dispositif d'assemblage conforme à l'invention.

La figure 2 est une vue de côté d'un deuxième mode de réalisation du dispositif d'assemblage conforme à l'invention.

La figure 3a est une vue de détail du dispositif de la figure 1.

La figure 3b est une vue de détail d'une variante du dispositif de la figure 3a.

La figure 4a est une vue en perspective du moyen élastique du dispositif de la figure 3a.

La figure 4b est une vue en perspective du moyen élastique du dispositif de la figure 3b.

La figure 5 est une vue de détail du dispositif de la figure 2.

La figure 6 est une vue de détail d'une variante du dispositif de la figure 5.

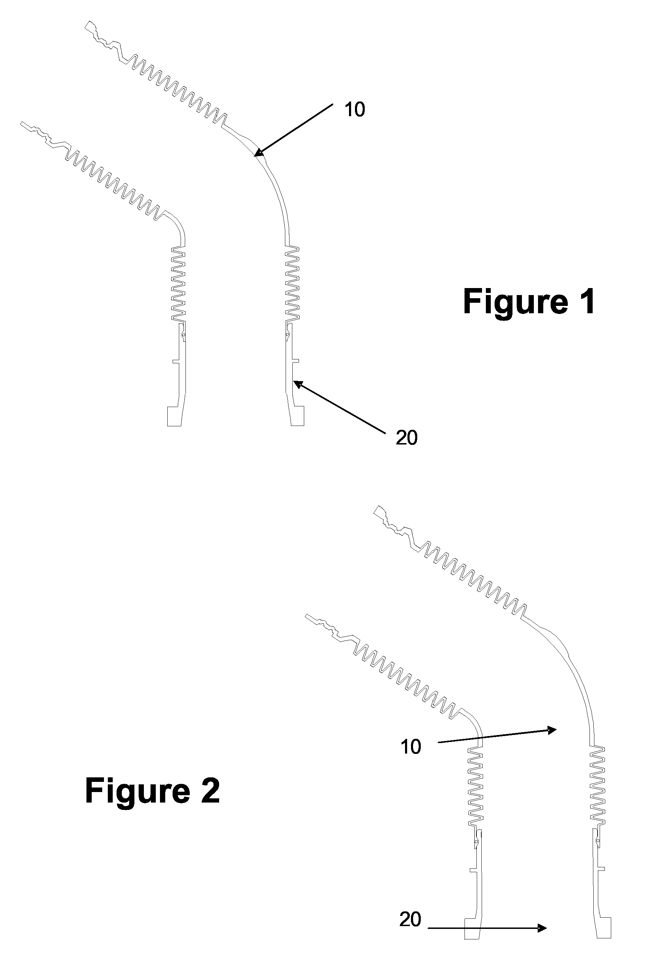

Sur la figure 1 est représenté en vue de côté un dispositif d'assemblage d'un raccord 10 souple en élastomère à l'intérieur d'un fût 20 d'un boîtier, par exemple un boîtier papillon d'un répartiteur d'un moteur à combustion interne.

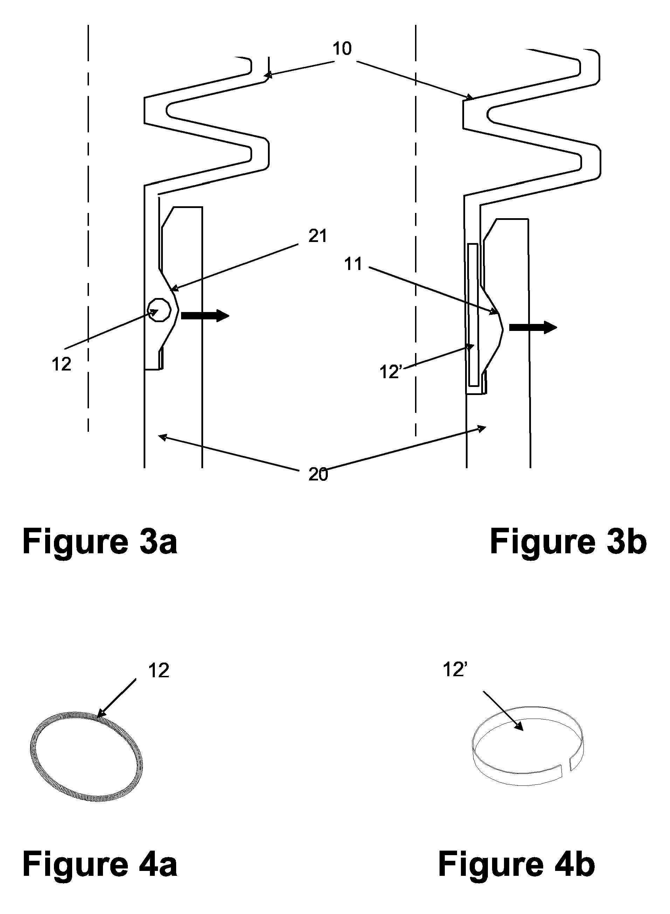

Comme on peut le voir plus en détail sur les figures 3a et 4a, ce dispositif d'assemblage comprend un premier profil 11 aménagé à une extrémité du raccord 10 sous la forme d'un bossage faisant saillie à l'extérieur du raccord, et un deuxième profil 21 constituée par une gorge aménagée à l'intérieur du fût 20. Ces profils 11 et 21 sont sensiblement conjugués et aptes à coopérer l'un avec l'autre lorsque le raccord 10 est emmanché à l'intérieur du fût 20, le bossage 11 du raccord 10 venant se loger à l'intérieur de la gorge 21 du fût 20.

De manière à réaliser un assemblage plus sûr et également le plus étanche possible, il est prévu sur la figure 3a de disposer à l'extrémité du raccord 10, et plus spécialement à l'intérieur du bossage 11, un moyen élastique 12 apte à exercer un effort de maintien du premier profil 11 contre le deuxième profil 21. Le bossage 11 est donc plaqué dans la gorge 21 par l'action dirigée vers l'extérieur exercée par le moyen élastique 12.

On obtient ainsi un assemblage de très bonne tenue mécanique et exempt de fuites. II est, de plus, facile à réaliser par simple emmanchement à force du raccord 10 dans le fût 20, sans avoir recours à un outillage quelconque. Cette opération d'assemblage peut donc être effectuée dans n'importe quel environnement, même des environnements très encombrés.

Ainsi qu'on peut le voir sur la figure 4a, le moyen élastique 12 utilisé dans le mode de réalisation de la figure 3a est un ressort cylindrique annulaire.

La figure 4b illustre une variante possible pour ledit moyen élastique. II s'agit dans cet exemple d'un ressort plat annulaire fendu 12'. La figure 3b montre comment ce moyen élastique 12' est intégré au bossage 11 du raccord 10.

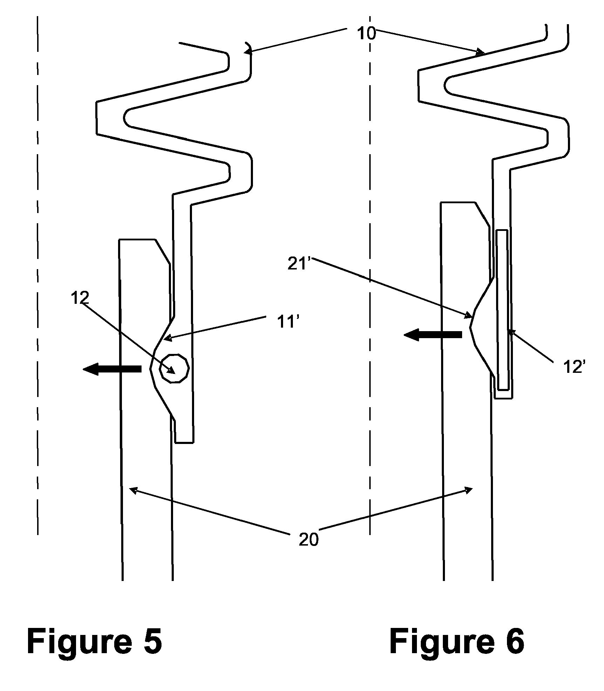

Les figures 2, 5 et 6 représentent des modes de réalisation qui diffèrent de ceux montrés aux figures 1, 3a et 3b en ce que le bossage 11' fait saillie vers l'intérieur du raccord 10, tandis que la gorge 21' est aménagée à l'extérieur du fût 20. Dans ce cas, lors de l'assemblage, le raccord 10 est emmanché à l'extérieur du fût 20.

## Revendications

1. Dispositif d'assemblage d'un raccord d'air (10) à un fût (20) de boîtier à l'entrée d'un répartiteur d'un moteur à combustion interne, le raccord (10) étant destiné à être emmanché à l'intérieur dudit fût (20), **caractérisé en ce que** ledit dispositif comprend, d'une part, un premier profil (11 ; 11') aménagé à une extrémité à l'extérieur du raccord (10) et un deuxième profil (21 ; 21') aménagé à l'intérieur dudit fût (20), lesdits premier et deuxième profils étant sensiblement conjugués et aptes coopérer par emmanchement du raccord (10) au fût (20), et, d'autre part, un moyen élastique (12 ; 12') disposé à ladite extrémité du raccord (10) et apte à exercer un effort de maintien du premier profil contre le deuxième profil.

2. Dispositif d'assemblage selon la revendication 1, **caractérisé en ce que** ledit moyen élastique (12 ; 12') est disposé à l'intérieur dudit premier profil (11, 11').

3. Dispositif d'assemblage selon l'une quelconque des revendication 1 à 2, **caractérisé en ce que** ledit moyen élastique est un ressort cylindrique annulaire (12).

4. Dispositif d'assemblage selon l'une quelconque des revendications 1 à 3, **caractérisé en ce que** ledit moyen élastique est un ressort plat annulaire fendu (12').
